# EUROPÄISCHE PATENTANMELDUNG

(11) **EP 0 957 014 A2**
(43) Veröffentlichungstag der Anmeldung: **17.11.1999**
(21) Anmeldenummer: 99108638.0
(22) Anmeldetag: 12.05.1999
(51) Int. Cl.: B60R 22/20

(54) **Umlenkbeschlag mit automatischer Verstellvorrichtung**

(30) Priorität: 15.05.1998 DE 29808844 U
(71) Anmelder: TRW Occupant Restraint Systems GmbH & Co. KG, 73551 Alfdorf (DE)
(72) Erfinder: Paschek, Joachim, 70563 Stuttgart (DE)
(74) Vertreter: Kitzhofer, Thomas, Dipl.-Ing.

(57) **Zusammenfassung**

Es wird ein Umlenkbeschlag mit automatischer Verstellvorrichtung für Sicherheitsgurtsysteme in Fahrzeugen, die wenigstens einen in Fahrzeuglängsrichtung verstellbaren Sitz aufweisen, vorgeschlagen. Die Verstellvorrichtung hat ein Zugübertragungsmittel, dessen erstes Ende an dem Sitz (1) arretiert ist und dessen zweites Ende mit dem Umlenkbeschlag (2) gekoppelt ist, und eine Blockiervorrichtung, die eine Verlagerung des Umlenkbeschlags (2) im Rückhaltefall verhindern soll. Das zweite Ende des Zugübertragungsmittels ist an einem Federelement (8) arretiert, welches wiederum an dem Umlenkbeschlag (2) befestigt ist und welches bei abrupter Krafteinleitung in den Umlenkbeschlag oder das Zugseil elastisch nachgibt, um eine Relativbewegung von Zugseil (7) und Umlenkbeschlag (2) zu erlauben.

## Beschreibung

Die Erfindung betrifft einen Umlenkbeschlag mit automatischer Verstellvorrichtung für Sicherheitsgurtsysteme in Fahrzeugen, wobei diese wenigstens einen in Längsrichtung verstellbaren Sitz aufweisen, mit einem Zugübertragungsmittel, dessen erstes Ende an dem Sitz arretiert ist und dessen zweites Ende mit dem Umlenkbeschlag gekoppelt ist, und einer Blockiervorrichtung, die eine Verlagerung des Umlenkbeschlags im Rückhaltefall verhindern soll.

Aus der DE 44 35 910 A1 ist bereits ein automatisch verstellbarer Umlenkbeschlag bekannt. Dieser dient dazu, den Umlenkbeschlag in der Höhe synchron mit der Verschiebung des Fahrzeugsitzes zu verstellen. Dazu ist ein Zugseil einerseits mit dem Fahrzeugsitz und andererseits mit dem Umlenkbeschlag gekoppelt. Zwischen dem umlenkbeschlagseitigen Ende des Zugseils und dem Umlenkbeschlag selbst ist bei dem bekannten Umlenkbeschlag eine Rollenkupplung vorgesehen, die eine Drehmomentbegrenzung aufweist. Damit wird die maximale, übertragbare Kraft begrenzt. Nachteil dieses Umlenkbeschlags samt Verstellvorrichtung ist die aufwendige Konstruktion mit zahlreichen Teilen.

Aus der DE 37 13 137 A1 ist eine automatische Verstellvorrichtung für einen Umlenkbeschlag bekannt, bei der zwischen Sitz und Bowdenzug eine Feder angeordnet ist, die das Seil des Bowdenzuges in Spannung halten und eine Überlastsicherung bilden soll. Das Seil kann aber aufgrund seiner trägen Masse bei einer Gurtstraffung nach wie vor zu hohen Belastungen ausgesetzt sein.

Die Erfindung schafft einen einfach aufgebauten und kostengünstig zu fertigenden Umlenkbeschlag mit automatischer Verstellvorrichtung. Dies wird bei einem Umlenkbeschlag samt Verstellvorrichtung der eingangs genannten Art dadurch erreicht, daß das zweite Ende des Zugübertragungsmittels an einem Federelement arretiert ist, welches wiederum an dem Umlenkbeschlag befestigt ist und welches bei abrupter Krafteinleitung in den Umlenkbeschlag oder in das Zugseil elastisch nachgibt, um eine Relativbewegung von Zugseil und Umlenkbeschlag zu erlauben. Während beim Stand der Technik eine aufwendige Kupplung zwischen Zugseil und Umlenkbeschlag vorgesehen ist, sieht die Erfindung lediglich das Zwischenschalten eines Federelements, z. B. einer Roll-, Zug-, Trieb- oder Spiralfeder vor. Damit wird auf einfache Weise eine Überlastung des Zugseils im Rückhaltefall vermieden, denn das Federelement bildet eine Überlastsicherung, die sich insbesondere in Verbindung mit Aufrollstraffern bewährt. Bei Kombination von automatischen Höhenverstellvorrichtungen und Aufrollstraffern ergeben sich nämlich besonders hohe Kraftspitzen, die auf das Zugübertragungsmittel einwirken können. Das Federelement ist ferner unmittelbar am Umlenkbeschlag angebracht, wodurch von vornherein eine Einleitung hoher Kräfte in das Zugseil ausgeschlossen ist.

Vorzugsweise stellt das Federelement den Umlenkbeschlag nach einer erfolgten Krafteinleitung und Verstellung des Umlenkbeschlags wieder in seine Ausgangslage zurück.

Darüber hinaus ist vorgesehen, daß die Relativbewegung, die das Federelement erlaubt, nicht kleiner als die maximale Distanz der Stellung des nicht verriegelten Umlenkbeschlags zur nächsten Verriegelungsstellung ist. Damit wird ein Erreichen der nächsten Verriegelungsstellung sichergestellt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine schematische Seitenansicht eines Fahrzeugsitzes und eines erfindungsgemäßen Umlenkbeschlags samt automatischer Verstellvorrichtung und verschiedenen Federelementen und
Figur 2 eine Detailansicht des Umlenkbeschlags und der Verstellvorrichtung im Bereich der Führungsschiene.

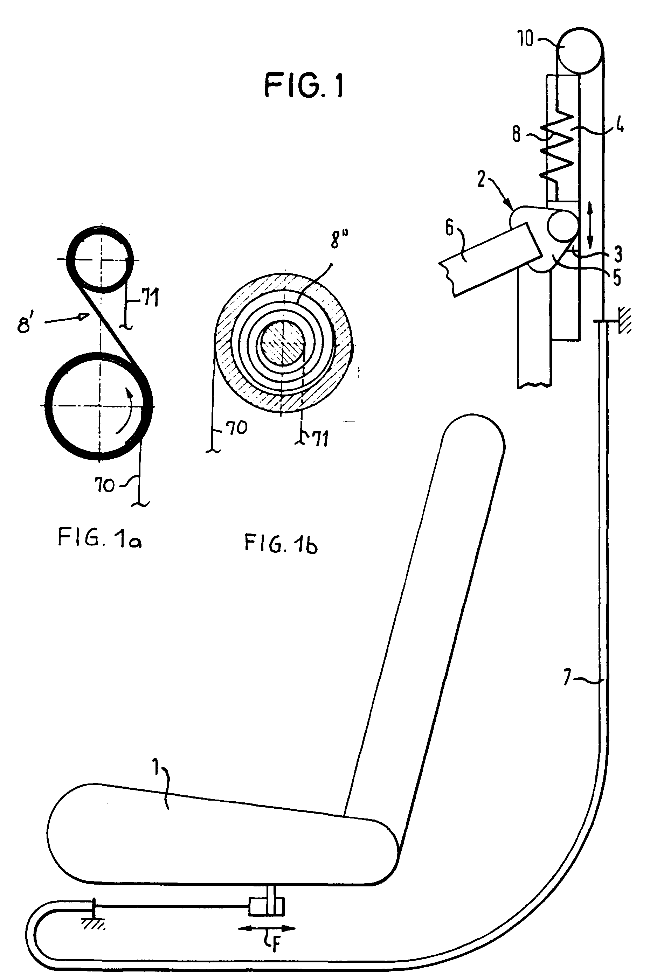

In Figur 1 ist ein in Längsrichtung des Fahrzeugs verstellbarer Fahrzeugsitz 1 gezeigt. Die Versteilmöglichkeit ist durch einen Doppelpfeil F symbolisiert. Ein Umlenkbeschlag 2 eines 3-Punkt-Sicherheitsgurtes umfaßt einen Schlitten 3, der in einer Schiene 4 vertikal verfahrbar ist, sowie ein triangelförmiges Beschlagteil 5, an dem der Sicherheitsgurt 6 umgelenkt wird. Ein Bowdenzug mit einem Zugseil 7 als Zugübertragungsmittel verbindet den Umlenkbeschlag 2 mit dem Sitz 1 und koppelt deren Bewegungen. Das erste, untere Ende des Zugseils 7 ist am Sitz befestigt und das zweite, obere Ende an dem oberen Ende einer Federeinrichtung in Form einer Feder 8. die als Zug- und/oder Spiralfeder ausgebildet ist. Das untere Ende der Feder ist wiederum an dem Schlitten 3 angebracht. Mit 10 ist eine Umlenkrolle für das Zugseil 7 bezeichnet. Die Feder 8 stellt eine Art Überlastsicherung dar, die zu hohe Belastungen des Zugseils im Rückhaltefall vermeiden soll. In den Figuren 1a und 1b sind eine Rollfeder 8' und eine Triebfeder 8'' gezeigt. Das Zugseil hat zwei getrennte Abschnitte, wobei der Abschnitt 70 mit dem Schlitten 3 und der Abschnitt 71 mit dem Sitz verbunden ist.

Die automatische Höhenverstellung des Umlenkbeschlags erfolgt durch Verstellen des Sitzes 1. Wird der Sitz nach vorn verstellt, wird automatisch über das Zugseil 7 der Umlenkbeschlag 2 nach unten verstellt und umgekehrt.

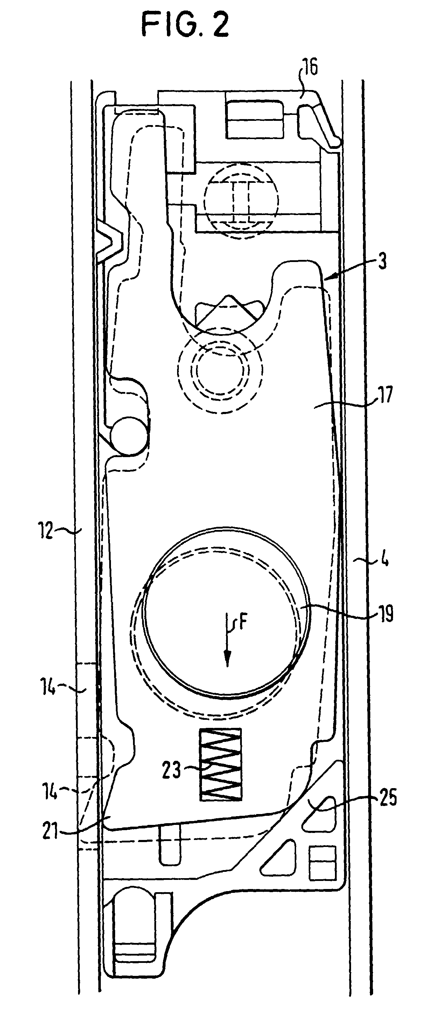

In Figur 2 ist die U-förmige Schiene 4 zu sehen, innerhalb der der Schlitten 3 verschiebbar angeordnet ist. Die Schiene 4 hat an ihrem linken Schenkel 12 mehrere gleichmäßig beabstandete Rastöffnungen 14. Der Schlitten ist aus im wesentlichen drei Teilen zusammengesetzt, nämlich einem hinteren Gleitteil 16, einem darauf aufliegenden Teil 17, an dem ein Bolzen 19 befestigt ist, der der Lagerung des Beschlagteils 5 dient und einem vorderen, nicht gezeigten Teil. Das Teil 17 hat eine Rastnase 21, die seitlich etwas vorsteht und im Rückhaltefall in eine Rasthöffnung 14 eindringen kann und mit ihr eine Blockiervorrichtung bildet, um eine Verriegelung des Schlittens 3 zu erreichen. Im normalen Betriebszustand ist die Rastnase 21 außer Eingriff mit den Rastöffnungen 14, um eine Höhenverstellung zu ermöglichen. Das Teil 17 und das hintere Teil 16 sind über eine Druckfeder 23 miteinander gekoppelt, wobei die Druckfeder 23 das Teil 17 so relativ zum Teil 16 positioniert, daß die Rastnase 21 außer Eingriff mit den Rastöffnungen 14 ist. Das Teil 16 hat an seinen unteren, der Rastnase 21 gegenüberliegenden Ende eine Rampenfläche 25, an der das Teil 17 entlanggleiten kann und sich, falls im Rückhaltefall über den Gurt eine nach unten gerichtete Kraft F auf das Teil 17 ausgeübt wird, nach links verschiebt, die Druckfeder 23 zusammenpreßt und die Rastnase 21 in Richtung zum Schenkel 12 bewegt.

Die Feder 8 ist im übrigen an dem Gleitteil 17 befestigt.

Im Rückhaltefall, wenn eine abrupte Kraft F aufgrund der trägen Masse des Insassen und aufgrund der Gurtstraffung auf das Teil 17 übertragen wird, könnte es bis zu einem Einrasten des Rastzahnes 21 zu einer Überbelastung des Zugseils 7 kommen. Die Feder 8 ist so ausgelegt, daß sie sich bei einer normalen Sitzverstellung nicht oder nur unwesentlich dehnt, bei einer abrupten, hohen Krafteinleitung wie im Rückhaltefall jedoch soweit dehnt, daß das Zugseil 7 dann nicht überlastet wird. Die Feder 8 ist so weich, daß sie ein Verschieben des Schlittens 3 bis in die nächste Verriegelungsstellung, in der der Rastzahn 21 in die Rastöffnung 14 eindringt, erlaubt.

Ein weiterer Vorteil der unmittelbar am Umlenkbeschlag angreifenden Feder 8 besteht darin, daß nach erfolgter Rückhaltung die Feder 8 den Umlenkbeschlag 2 wieder in die Ausgangsstellung zurückführt. Ein ruckartiges Reißen am Sicherheitsgurt 6 führt damit nicht unmittelbar dazu, daß der Schlitten bleibend verriegelt ist, er wird vielmehr durch die Feder 8 in seine unverriegelte Ausgangsstellung zurückgeführt.

Ein wesentlicher Vorteil der Erfindung besteht auch in der Anordnung der Feder, die unmittelbar am Umlenkbeschlag 2 angeordnet ist und nicht zwischen dem Sitz und dem ersten Ende des Zugseils. Bei letzterer ist nämlich nachteilig, daß die Feder nur unzureichend die Überlast vom Zugseil 7 fernhält. Die träge Masse des Zugseils und deren Reibung in der sie umgebenden Führungshülse führen dazu, daß bei Auftreten einer nach unten gerichteten Kraft, die auf den Schlitten 3 wirkt, das Zugseil 7 stark belastet werden kann, denn die Entkopplung von dem Sitz durch die Feder erfolgt in diesem Fall am dem Umlenkbeschlag 2 entgegengesetzten Ende des Zugseils 7.

## Patentansprüche

1. Umlenkbeschlag mit automatischer Verstellvorrichtung für Sicherheitsgurtsysteme in Fahrzeugen, wobei diese wenigstens einen in Fahrzeuglängsrichtung verstellbaren Sitz aufweisen,
mit einem Zugübertragungsmittel, dessen erstes Ende an dem Sitz (1) arretiert ist und dessen zweites Ende mit dem Umlenkbeschlag (2) gekoppelt ist,
und einer Blockiervorrichtung, die eine Verlagerung des Umlenkbeschlags (2) im Rückhaltefall verhindern soll,
dadurch gekennzeichnet, daß
das zweite Ende des Zugübertragungsmittels an einem Federelement (8; 8'; 8'') arretiert ist,
welches wiederum an dem Umlenkbeschlag (2) befestigt ist und welches
bei abrupter Krafteinleitung in den Umlenkbeschlag oder das Zugseil elastisch nachgibt, um eine Relativbewegung von Zugseil (7) und Umlenkbeschlag (2) zu erlauben.

2. Umlenkbeschlag nach Anspruch 1, dadurch gekennzeichnet, daß das Federelement (8) eine Roll- (8'), Zug-, Trieb- (8'') oder Spiralfeder ist.

3. Umlenkbeschlag nach Anspruch 1 oder 2, dadurch gekennzeichnet, daß das Federelement (8; 8'; 8'') so ausgelegt ist, daß es bei abrupter Krafteinleitung in den Umlenkbeschlag (2) eine Verschiebung desselben zuläßt und ihn nach erfolgter Krafteinleitung wieder in eine Ausgangslage zurückführt.

4. Umlenkbeschlag nach einem der vorstehenden Ansprüche, dadurch gekennzeichnet, daß der Umlenkbeschlag (2) diskrete, beabstandete Verriegelungsstellungen hat und daß das Federelement (8; 8'; 8'') so ausgelegt ist, daß sich im Rückhaltefall der Umlenkbeschlag bis zur nächsten Verriegelungsstellung verschieben kann.

5. Umlenkbeschlag nach einem der vorstehenden Ansprüche, dadurch gekennzeichnet, daß der Umlenkbeschlag ein Beschlagteil (5) und einen in einer Schiene (4) verschiebbaren Schlitten (3) aufweist, an dem das Beschlagteil (5) angelenkt ist, und daß das Federelement (8; 8'; 8'') an dem Schlitten (3) befestigt ist.
